# EUROPEAN PATENT APPLICATION

(11) **EP 3 287 971 A1**
(43) Date of publication of application: **28.02.2018**
(21) Application number: 16782570.2
(22) Date of filing: 12.04.2016
(51) Int. Cl.: G06Q 30/00, G06K 19/06

(54) **DATA AUTHENTICITY IDENTIFICATION METHOD FOR SAFETY CHECK OF TWO-DIMENSIONAL CODE**

(30) Priority: 20.04.2015 CN 201510188928
(71) Applicant: Sigmatrix Technology Co., Ltd., Beijing 100062 (CN)
(72) Inventor: WU, Lin, Beijing 100062 (CN)
(74) Representative: Keil & Schaafhausen Patent- und Rechtsanwälte PartGmbB
(86) International application number: PCT/CN2016/079113
(87) International publication number: WO 2016/169423

(57) **Abstract**

Disclosed is a data authenticity identification method for safety check of a two-dimensional code, comprising the steps of: S1, adding a check code into a character random code, so as to form a byte stream random number, and converting same into a check random code through data encryption and data conversion; S2, forming the check random code and a URL into a background access address, and generating the background access address in a two-dimensional code; S3, acquiring the check random code and the URL by scanning the two-dimensional code, deciphering and restoring the check random code, so as to obtain the character random code and the check code, and generating a new check code according to the character random code; S4, comparing the check code obtained by decryption and restoration with the generated new check code, if they are not consistent, returning validation failure information; and if they are consistent, conducting a further verification operation. The present invention can effectively prevent the influence of a brute-force crack, and avoid the paralysis of a database caused by the access of a large amount of data, thereby improving the security of a two-dimensional code to a certain extent.

## Description

### BACKGROUND

### Technical Field

The present invention relates to the field of anti-counterfeiting and authenticity identification technologies, to a data authenticity identification method, and in particular, to a data authenticity identification method for a safety check on a two-dimensional code.

### Related Art

A two-dimensional code is automatically read by using an image input device or a photoelectric scanning device, to implement automatic information processing, and is an important portal of a mobile phone. A mobile phone can quickly visit the Internet by using a two-dimensional code. With application of two-dimensional codes, various two-dimensional code related products, such as two-dimensional code electronic tickets, two-dimensional code vouchers, two-dimensional code payment, two-dimensional code anti-counterfeiting, two-dimensional code tracing, and two-dimensional code bonus points, emerge in large numbers. Two-dimensional codes are applied to an increasing number of fast moving consumer goods. Two-dimensional codes begin to be applied to each can of milk powder and each bottle of mineral water. However, when two-dimensional codes are applied to marketing, because specific profit can be obtained from each two-dimensional code, some people begin to attempt to crack encoding of the two-dimensional code in a brute-force attacking manner.

Currently, a large number of technique providers and platforms use two-dimensional codes for anti-counterfeiting, tracing, bonus points, marketing activities, and the like. A two-dimensional code encoding manner generally used by the technique providers and platforms is adding a random code to a uniform resource locator (URL). This random code may be a digital random code or an alphanumerical random code. A corresponding identification and query process includes:
1) using, by a user, two-dimensional code identification software to identify two-dimensional code information and obtaining an encoded string of a URL and a random code in a two-dimensional code;
2) accessing a background server by using the URL including the random code, and extracting, by the background server, a random code data string in the URL; and
3) querying a database by using the random code data string, where if the random code data string exists, the querying succeeds, if it is an anti-counterfeiting service, indicating that this product is an authentic product, and if it is a bonus point service, setting a bonus point value for the user.

Usually, in application to common anti-counterfeiting and sourcing, the foregoing identification and query process is used because generally, people would not crack encoding of a random code in a brute-force attacking manner without being driven by profit. However, if it is a raffle with a 100% winning rate or a high-reward raffle activity with a high ratio, many people may attempt to crack a random code to obtain profit by using a brute-force attacking program, that is, a specifically-programmed simulation program. Because if the foregoing random code encoding manner is used, each time a user makes access, the database needs to be queried. When some people crack the random code in a brute-force attacking manner, a large amount of access to the database is caused instantly, and consequently, a server of the database is likely to go down. If an operation manner similar to that of a desktop computer is used, a user needs to enter a check code each time, user experience is seriously affected, and satisfaction and participation enthusiasm of the user are reduced.

### SUMMARY

In view of disadvantages of the prior art, a technical problem to be resolved by the present invention is to provide a data authenticity identification method for a safety check on a two-dimensional code.

To achieve the foregoing invention objective, the following technical solutions are used by the present invention:
A data authenticity identification method for a safety check on a two-dimensional code is provided, including the following steps:
   S1: adding a check code into a character random code, so as to form a byte stream random number, and converting same into a check random code by means of data encryption and data conversion;
   S2: combining the check random code and a URL into a background access address, and generating a two-dimensional code from the background access address;
   S3: obtaining the check random code and the URL by scanning the two-dimensional code, decrypting and restoring the check random code, so as to obtain the character random code and the check code, and generating a new check code according to the character random code; and
   S4: comparing the check code obtained by means of decryption and restoration with the generated new check code, and if the check code obtained by means of decryption and restoration and the generated new check code are not consistent, returning verification failure information; and if the check code obtained by means of decryption and restoration and the generated new check code are consistent, performing a further verification operation.

Preferably, the character random code is formed of letters, numbers, or letters and numbers.

Preferably, a length of the character random code is equal to or greater than a length of a 16-bit character.

Preferably, the check code is formed of letters, numbers, or letters and numbers; and component elements of the check code and the character random code are the same.

Preferably, in step S1, converting the character random code into a check random code specifically includes the following steps:
S11: generating a character random code and converting the character random code into a byte stream random code;
S12: generating a check code according to the byte stream random code, and combining the byte stream random code and the check code into a byte stream random number; and
S13: converting the byte stream random number into a check random code of character data by means of data conversion, and outputting the check random code.

Preferably, generating a new check code when performing two-dimensional code verification specifically includes the following steps:
S31: converting the obtained check random code into byte stream data;
S32: converting the byte stream data into unencrypted byte stream data by means of decryption and restoration; and
S33: extracting the byte stream random code and the check code from the unencrypted byte stream data, and generating a check code from the byte stream random code.

Preferably, in step S4, a two-dimensional code verification process specifically includes the following steps:
S41: comparing the extracted check code with the generated check code, and if the extracted check code and the generated check code are not consistent, which proves that the data is invalid data, returning verification failure information; and if the extracted check code and the generated check code are consistent, performing step S42;
S42: restoring the byte stream random code to an original character random code; and
S43: submitting the character random code to a database for verification, and if verification succeeds, indicating that the data is valid data, granting a right of a valid data response.

Preferably, the step of generating a check code from the byte stream random code in step S33 is the same as the step of generating a check code according to the byte stream random code in step S12.

In the data authenticity identification method for a safety check on a two-dimensional code provided by the present invention, a check code is added into a character random code to form a check random code, the check random code and a URL are combined into a background access address, when a user needs to access the background address, the check random code and the URL are obtained by scanning the two-dimensional code, and a background server analyzes validity of the random code by using the check code. A database can be accessed only when the check random code is valid, so that validity of the random code is verified. A random code that fails to pass the check code verification is directly returned, thereby effectively preventing the database from going down because of brute-force cracking and a large amount of access to the database.

### BRIEF DESCRIPTION OF THE DRAWINGS

FIG. 1 is an overall flowchart of a data authenticity identification method for a safety check on a two-dimensional code according to the present invention;
FIG. 2 is a flowchart of encoding a check random code in a data authenticity identification method according to the present invention; and
FIG. 3 is a flowchart of decrypting and verifying a check random code in a data authenticity identification method according to the present invention.

### DETAILED DESCRIPTION

The following further describes the specific technical content of the present invention in detail with reference to the accompanying drawings and specific embodiments.

To avoid a problem that a server is likely to go down because of malicious cracking of a random code by using a program and a large amount of database access caused by a simulation program, the present invention provides a novel data authenticity identification method, that is, using a check random code in a two-dimensional code. The check random code means adding a check code into a random code. After receiving the check random code, a background server analyzes whether the random code is valid by using the check code. Only when the check random code is valid, a database can be accessed again, and a random code that fails to pass the check code verification is directly returned, thereby effectively preventing the database from going down because of brute-force cracking and a large amount of access to the database. Two-step verification on the two-dimensional code also improves accuracy of the verification to a certain extent.

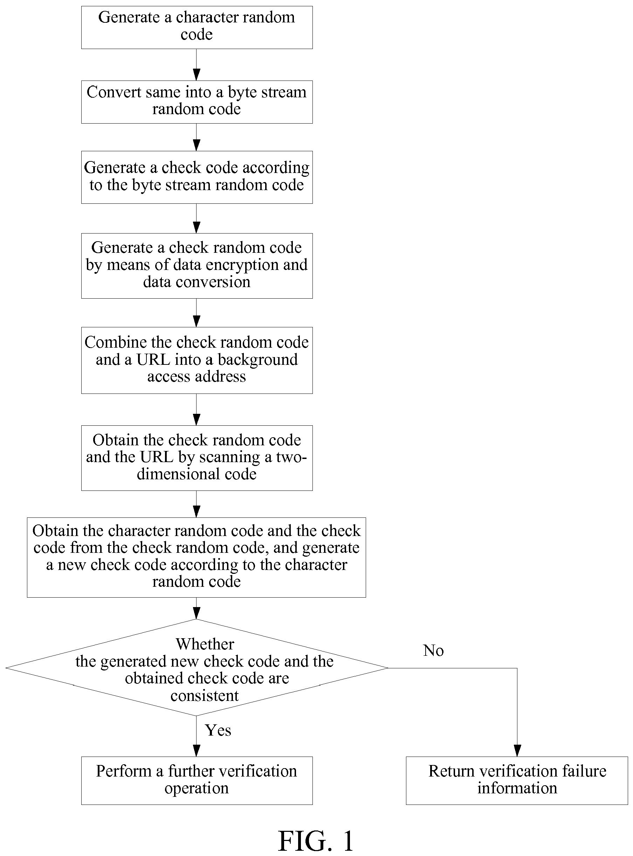

As shown in FIG. 1, the present invention provides a data authenticity identification method for a safety check on a two-dimensional code, specifically including the following steps: first, adding a check code into a character random code, so as to form a byte stream random number, and converting same into a check random code by means of data conversion; secondly, combining the check random code and a URL into a background access address, generating a two-dimensional code from the background access address, and assigning the two-dimensional code to a product; then, obtaining, by a user, the check random code and the URL by scanning the two-dimensional code of the product, decrypting and restoring the check random code, so as to obtain the character random code and the check code, and generating a new check code according to the character random code; finally, comparing the check code obtained by means of decryption and restoration with the generated new check code; and if the check code obtained by means of decryption and restoration and the generated new check code are consistent, performing a further verification operation; and if the check code obtained by means of decryption and restoration and the generated new check code are not consistent, returning verification failure information. The following describes this process in detail.

S1: Add a check code into a character random code, so as to form a byte stream random number, and convert same into a check random code by means of data conversion.

In this embodiment of the present invention, an alphanumerical random code without verification information is referred to as a character random code. The character random code may be formed of an independent random code, or a combination of a service code and a random code. An alphanumerical random code that is subject to a series of conversion and encryption and that carries a check code is referred to as a check random code. The character random code may be formed of letters and numbers or may be formed of only numbers or only letters.

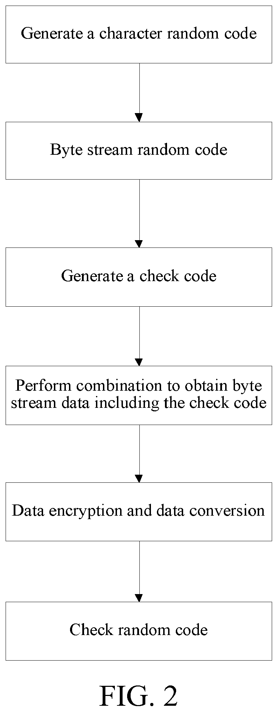

As shown in FIG. 2, converting the character random code into a check random code specifically includes the following steps.

S11: Generate a character random code and convert the character random code into a byte stream random code.

In this embodiment of the present invention, a character random code is first generated. The character random code is used for identifying each article and is a unique random coding that cannot be repeated. During encoding, to avoid a malicious guess, the character random code usually has a length greater than or equal to a length of a 16-bit character. After the character random code is generated, the character random code is converted into a byte stream random code.

S12: Generate a check code according to the byte stream random code, and combine the byte stream random code and the check code into a byte stream random number.

A check code is generated from the converted byte stream random code by using a check algorithm such as a XOR/AND algorithm or a parity check. The generated check code may be converted into a byte stream formed of numbers, letters, or numbers and letters by means of data conversion. The byte stream needs to correspond to the character random code. That is, if the character random code is formed of numbers, the check random code is also formed of numbers; and if the character random code is formed of letters, the check random code is also formed of letters. Subsequently, the byte stream random code and the generated check code are combined into a byte stream random number.

S13. Convert the byte stream random number into a check random code of character data by means of data encryption and data conversion, and output the check random code.

After the byte stream random code and the generated check code are combined into a byte stream random number, XOR encryption is performed on the byte stream random number byte by byte. Data conversion is performed on the encrypted byte stream data. Data conversion may be converting the encrypted byte stream data in a manner of converting data in order by byte or the like into a form that is unlikely to identify or crack. Subsequently, the converted byte stream data is converted into a check random code of character data and is output for further two-dimensional code manufacturing and processing.

S2: Combine the check random code and a URL into a background access address, generate a two-dimensional code from the background access address, and assign the two-dimensional code to a product.

The check random code obtained in step S1 is obtained, and the check random code and the URL are combined into a background access address. The background access address is used to generate a two-dimensional code, and the two-dimensional code is assigned to a product. When a user needs to perform verification on the two-dimensional code, the user only needs to scan the two-dimensional code on the product. After identification, further verification may be performed on the two-dimensional code.

S3: Obtain the check random code and the URL by scanning the two-dimensional code of the product by a user, decrypt and restore the check random code, so as to obtain the character random code and the check code, and generate a new check code according to the character random code.

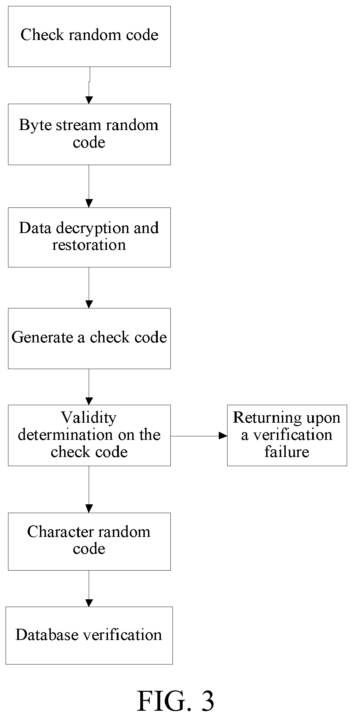

When a user needs to perform verification on the two-dimensional code, the user only needs to scan the two-dimensional code on the product. After identification, the check random code and the URL are obtained. Decryption and restoration are performed on the check random code by means of an inverse process of data encryption and data conversion in step S13, so as to obtain unencrypted byte stream data. The character random code is extracted from the byte stream data. A new check code may be generated, by using the step of generating a check code according to the byte stream random code in step S12, according to the character random code obtained by means of decryption and restoration. A new check code is generated when performing two-dimensional code verification, as shown in FIG. 3, which specifically includes the following steps:
S31: Convert the obtained check random code into byte stream data.
S32: Convert the byte stream data into unencrypted byte stream data by means of decryption and restoration.
S33: Extract the byte stream random code and the check code from the unencrypted byte stream data, and generate a check code from the byte stream random code.

S4: Compare the check code obtained by means of decryption and restoration with the generated new check code; and if the check code obtained by means of decryption and restoration and the generated new check code are not consistent, return verification failure information; and if the check code obtained by means of decryption and restoration and the generated new check code are consistent, perform a further verification operation.

In step S3, the character random code and the check code are obtained by performing decryption and restoration on the check random code, and the new check code is generated according to the character random code. The check code obtained by means of decryption and restoration is compared with the generated new check code to determine validity of the two-dimensional code. If the two check codes are consistent, the two-dimensional code is a valid two-dimensional code, and access to the background address is performed; if the two check codes are not consistent, verification failure information is returned. Invalid information is not allowed to access the background database, so as to prevent a large amount of access to the database from being caused instantly when people crack the random code in a brute-force attacking manner, so as to ensure secure and stable running of a database system. Herein, the two-dimensional code verification specifically includes the following steps:
S41: Compare the extracted check code with the generated check code, and if the extracted check code and the generated check code are not consistent, which proves that the data is invalid data, return verification failure information, and end processing; and if the extracted check code and the generated check code are consistent, perform step S42;
S42: Restore the byte stream random code to an original character random code.
S43: Submit the character random code to a database for verification, and if verification succeeds, grant a right of a valid data response.

In conclusion, in the data authenticity identification method for a safety check on a two-dimensional code of the present invention, a check code is added into a character random code to form a check random code, the check random code and a URL are combined into a background access address, a two-dimensional code is generated from the access address, and a user obtains the check random code and the URL by scanning the two-dimensional code, and transmits them to a background server. After receiving the check random code, the background server analyzes validity of the random code by using the check code. A database can be accessed only when the check random code is valid. A random code that fails to pass the check code verification is directly returned, thereby effectively preventing the database from going down because of brute-force cracking and a large amount of access to the database. Additionally, two-step verification on the two-dimensional code improves the security of the two-dimensional code to a certain extent.

The foregoing describes a data authenticity identification method for a safety check on a two-dimensional code according to the present invention in detail. To persons of ordinary skill in the art, making any obvious modifications without departing from the essential spirit of the present invention constitute infringement on the present invention patent and corresponding legal responsibility will be undertaken.

## Claims

1. A data authenticity identification method for a safety check on a two-dimensional code, comprising the following steps:
S1: adding a check code into a character random code, so as to form a byte stream random number, and converting same into a check random code by means of data encryption and data conversion;
S2: combining the check random code and a uniform resource locator (URL) into a background access address, and generating a two-dimensional code from the background access address;
S3: obtaining the check random code and the URL by scanning the two-dimensional code, decrypting and restoring the check random code, so as to obtain the character random code and the check code, and generating a new check code according to the character random code; and
S4: comparing the check code obtained by means of decryption and restoration with the generated new check code, and if the check code obtained by means of decryption and restoration and the generated new check code are not consistent, returning verification failure information; and if the check code obtained by means of decryption and restoration and the generated new check code are consistent, performing a further verification operation.

2. The data authenticity identification method for a safety check on a two-dimensional code according to claim 1, wherein:
the character random code is formed of letters, numbers, or letters and numbers.

3. The data authenticity identification method for a safety check on a two-dimensional code according to claim 1, wherein:
a length of the character random code is equal to or greater than a length of a 16-bit character.

4. The data authenticity identification method for a safety check on a two-dimensional code according to claim 1, wherein:
the check code is formed of letters, numbers, or letters and numbers; and
component elements of the check code and the character random code are the same.

5. The data authenticity identification method for a safety check on a two-dimensional code according to claim 1, wherein in step S1, converting a character random code into a check random code specifically comprises the following steps:
S11: generating a character random code and converting the character random code into a byte stream random code;
S12: generating a check code according to the byte stream random code, and combining the byte stream random code and the check code into a byte stream random number; and
S13: converting the byte stream random number into a check random code of character data by means of data conversion, and outputting the check random code.

6. The data authenticity identification method for a safety check on a two-dimensional code according to claim 5, wherein generating a new check code when performing two-dimensional code verification specifically comprises the following steps:
S31: converting the obtained check random code into byte stream data;
S32: converting the byte stream data into unencrypted byte stream data by means of decryption and restoration; and
S33: extracting the byte stream random code and the check code from the unencrypted byte stream data, and generating a check code from the byte stream random code.

7. The data authenticity identification method for a safety check on a two-dimensional code according to claim 1, 5 or 6, wherein in step S4, a two-dimensional code verification process specifically comprises the following steps:
S41: comparing the extracted check code with the generated check code, and if the extracted check code and the generated check code are not consistent, which proves that the data is invalid data, returning verification failure information; and if the extracted check code and the generated check code are consistent, performing step S42;
S42: restoring the byte stream random code to an original character random code; and
S43: submitting the character random code to a database for verification, and if verification succeeds, indicating that the data is valid data, granting a right of a valid data response.

8. The data authenticity identification method for a safety check on a two-dimensional code according to claim 1, 5 or 6, wherein:
the step of generating a check code from the byte stream random code in step S33 is the same as the step of generating a check code according to the byte stream random code in step S12.
